# EUROPEAN PATENT APPLICATION

(11) **EP 4 746 255 A1**
(43) Date of publication of application: **20.05.2026**
(21) Application number: 24213272.8
(22) Date of filing: 15.11.2024
(51) Int. Cl.: H02K 1/32, H02K 9/19, H02K 1/276, H02K 7/00

(54) **E-MACHINE SYSTEM WITH ROTOR MEMBER HAVING FLUID PASSAGES**

(71) Applicant: Garrett Transportation I Inc., Torrance, CA 90504 (US)
(72) Inventor: Kuppa, Santosh, Kumar, 560103 Bangalore (IN); Slama, David, 62700 Brno (CZ); Mach, Zdenek, 62700 Brno (CZ); Petr, David, 62700 Brno (CZ); Tomanec, Filip, 62700 Brno (CZ); Danko, Matus, 62700 Brno (CZ)
(74) Representative: Ingrassia, Fisher & Lorenz UK Ltd.

(57) **Abstract**

An e-machine includes a stator member that defines an axis and a rotor member with a shaft that is supported for rotation about the axis. The shaft includes a shaft fluid passage defined therein and extending along the axis. The shaft fluid passage defines a fluid inlet. The rotor member includes a core arrangement that is supported on the shaft. The core arrangement is operably coupled to the stator member to be driven thereby about the axis with the shaft. The core arrangement includes a core fluid passage that is fluidly coupled to the shaft fluid passage. The core fluid passage defines a fluid outlet. The rotor member defines a fluid path in a downstream direction from the fluid inlet and through the shaft fluid passage to the core fluid passage, and further in the downstream direction from the core fluid passage to the fluid outlet.

## Description

### TECHNICAL FIELD

The present disclosure relates, generally, to an e-machine system such as an electric motor system, electric generator system, and the like, and the present disclosure relates, more particularly, to an e-machine system with a rotor member having fluid passages.

### BACKGROUND

E-machines, such as electric motors, electric generators, and combination motor/generators, are provided for a variety of uses. For example, electric traction motors are provided for electric vehicles, locomotives, and the like.

E-machine systems may generate significant heat during operation, which may be detrimental. Permanent magnet motors, for example, may experience losses in the form of eddy currents, hysteresis losses, stray load losses, etc. As a result of these losses, there may be increased heat, decreased operating efficiency, shortened motor lifespan, and/or decreased power output. Thus, e-machine systems are proposed that include cooling features. However, providing such cooling features remains challenging. Additionally, some e-machine systems may have moving parts that need lubrication for maintaining proper operation, but this can be difficult too. There may be detrimental increases in costs, part count, device complexity, size, bulkiness, and/or weight if these features are included.

Thus, there remains a need for an e-machine system that provides effective cooling. There also remains a need for an e-machine system that effectively lubricates parts within the system. There remains a need for these e-machine systems, wherein the cooling and/or lubricating features are provided in a relatively compact, low-weight package. There is also a need for such an e-machine system that also provides high manufacturing efficiency for reduced costs and manufacturing time.

### SUMMARY

According to a first aspect of the present disclosure, an e-machine is disclosed that includes a stator member that defines an axis and a rotor member with a shaft that is supported for rotation about the axis. The shaft includes a shaft fluid passage defined therein and extending along the axis. The shaft fluid passage defines a fluid inlet. The rotor member includes a core arrangement that is supported on the shaft. The core arrangement is operably coupled to the stator member to be driven thereby about the axis with the shaft. The core arrangement includes a core fluid passage that is fluidly coupled to the shaft fluid passage. The core fluid passage defines a fluid outlet. The rotor member defines a fluid path in a downstream direction from the fluid inlet and through the shaft fluid passage to the core fluid passage, and further in the downstream direction from the core fluid passage to the fluid outlet.

Embodiments of the present disclosure are defined in the appended claims.

### BRIEF DESCRIPTION OF DRAWINGS

The various embodiments will hereinafter be described in conjunction with the following drawing figures, wherein like numerals denote like elements, and wherein:
FIG. 1 is a schematic illustration of an e-machine system according to example embodiments of the present disclosure;
FIG. 2 is a cross-sectional view of an e-machine of the e-machine system of FIG. 1 according to example embodiments of the present disclosure;
FIG. 3 is a cross-sectional view of a rotor member of the e-machine of FIG. 2 according to example embodiments of the present disclosure;
FIG. 4 is a cross-sectional view of the rotor member of the e-machine taken along the line 4-4 of FIG. 3;
FIG. 5 is a cross-sectional view of the rotor member of the e-machine taken along the line 5-5 of FIG. 3;
FIG. 6 is an isometric view of a radial distribution member of the rotor member of the e-machine according to additional example embodiments of the present disclosure;
FIG. 7 is a cross-sectional view of a portion of the rotor member of the e-machine according to additional example embodiments of the present disclosure; and
FIG. 8 is a cross-sectional view of the e-machine system according to additional example embodiments of the present disclosure.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Broadly, example embodiments disclosed herein include an e-machine system with an associated fluid circuit that provides cooling and/or lubricating fluid to the e-machine system. The e-machine system includes a rotor member. The rotor member includes one or more fluid channels, passages, openings, conduits, tubes, apertures, etc. through which a fluid may flow for cooling and/or lubricating the e-machine system. The rotor member includes a shaft and a rotor core arrangement that defines one or more such fluid passages having a fluid path extending from an interior of the shaft and further downstream into the core arrangement. During operation, fluid is provided to the shaft, and this fluid flows directly into and through the rotor core arrangement for cooling the same. Also, the fluid passages outlet the fluid toward the stator member (e.g., toward stator end windings) for cooling, and/or outlet the fluid toward bearings, transmission components, and/or other areas for lubricating the same. Thus, the e-machine system may be efficiently and effectively cooled and lubricated.

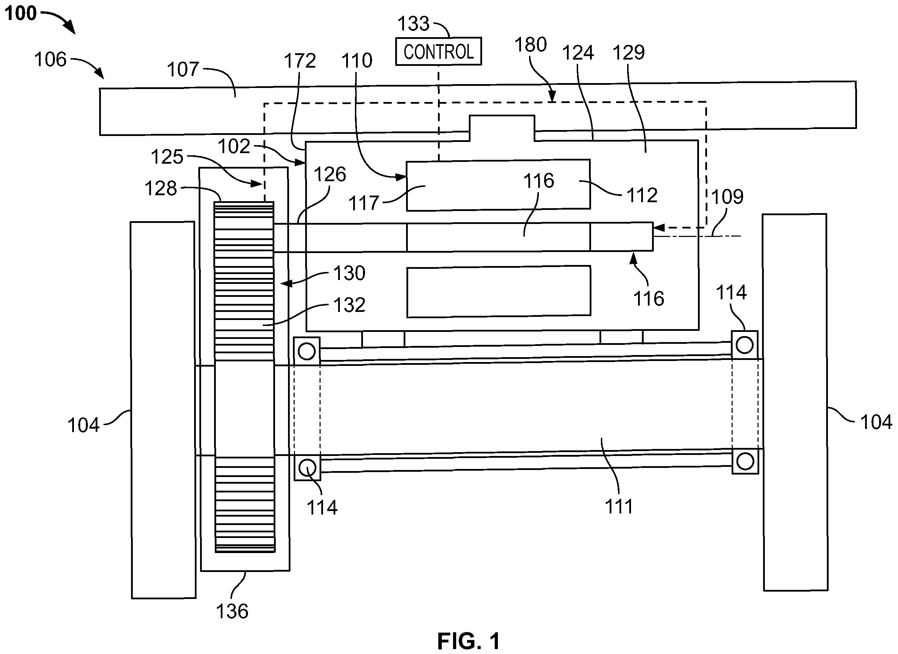

FIG. 1 is a schematic view of an e-machine system 100 according to example embodiments of the present disclosure. The e-machine system 100 may have a variety of configurations. In some embodiments, the e-machine system 100 may be configured as a traction drive system 102 that is included, for example, on a vehicle 106. Thus, the traction drive system 102 may be configured for driving one or more wheels 104 of the vehicle 106. More specifically, the wheels 104 may be included at opposite ends of an axle 111, and a chassis 107 may be supported on the wheels 104 by a suspension system (not shown). The vehicle 106 may be an electric car, truck, van, motorcycle, boat, or other vehicle. However, it will be appreciated that the e-machine system 100 may be configured otherwise without departing from the scope of the present disclosure. It will be appreciated, for example, that the e-machine system 100 may be configured for driving an input member of a differential, which is operatively attached to the wheels 104 without departing from the scope of the present disclosure.

Generally, the e-machine system 100 may include a housing 125. The housing 125 may include an e-machine housing 124 with a cavity 129 therein. The e-machine system 100 may also include an e-machine 110 that is received in the cavity 129 and housed within the e-machine housing 124.

The e-machine 110 may be an electric motor 112 in some embodiments. However, it will be appreciated that the e-machine 110 may be configured as an electric generator. Furthermore, the e-machine 110 may be operable in some modes as a motor and in additional modes as a generator. The e-machine 110 may include a rotor member 116 and a stator member 117 that are housed within the cavity 129 of the e-machine housing 124. The stator member 117 may be fixed within the housing 124. The stator member 117 and/or the rotor member 116 may define an axis 109. The rotor member 116 may be supported via one or more bearings for rotation about the axis 109. The stator member 117 may surround the rotor member 116 in a circumferential direction about the axis 109. The stator member 117 may be operatively connected to the rotor member 116 for driving the rotor member 116 in rotation about the axis 109.

Also, the e-machine system 100 may include a transmission 130. The transmission 130 may generally include a geartrain 132 that is housed within a gearbox housing 136 of the housing 125. The gearbox housing 136 may be attached (e.g., fixed) to a side wall 172 of the e-machine housing 124. The rotor member 116 may be connected to the geartrain 132 for inputting rotational power thereto. More specifically, a shaft engagement member 128 may be connected and operably supported on one end of the rotor member 116. The shaft engagement member 128 may be a shaft end, a gearbox shaft, a spline, and/or other feature for operatively attaching the rotor member 116 to the transmission 130. Furthermore, the e-machine 110 may be coupled to the wheels 104 via the transmission 130. The geartrain 132 may be attached to the shaft engagement member 128 and to the axle 111. The gearbox housing 136 and the e-machine housing 124 may be moveably supported on the axle 111 by one of more bearings 114 (e.g., a bearing sleeve, suspension tube, etc.) such that the axle 111 may rotate relative thereto. The geartrain 132 may be of any suitable type. The geartrain 132 may operatively connect the e-machine 110 and the axle 111 and may provide a chosen gear ratio from its input to its output.

During operation of the electric motor 112, the stator member 117 may rotatably drive the rotor member 116 and the shaft engagement member 128 about the axis 109. This rotational power may transfer to the geartrain 132, which may transmit the power to the axle 111 to rotate the wheels 104 and propel the vehicle 106.

Furthermore, the e-machine system 100 may include a fluid circuit 180. The fluid circuit 180 may be configured for circulating a fluid, such as a lubricating and/or cooling fluid. The fluid may be a liquid. The fluid may be a lubricant/coolant oil in some embodiments. The fluid may, therefore, be a number of known lubricating oils also used in heat exchanger/cooling systems.

The fluid circuit 180 includes flow structures (tubes, pipes, etc.) that fluidly connect the components discussed herein. The fluid circuit 180 may be a closed fluid circuit with at least one pump that pumps the fluid therethrough. In some embodiments, the fluid circuit 180 also includes a filter that filters the fluid as it moves therethrough. In some embodiments, the fluid circuit 180 further includes a heat exchanger, such as a cross-flow radiator system that is supported on the vehicle 106. The heat exchanger is configured for cooling (i.e., removing heat) from the fluid as it flows therethrough.

The fluid circuit 180 is coupled to the rotor member 116 as will be discussed. Accordingly, the fluid circuit 180 and the rotor member 116 include features that provide cooling to the rotor member 116 and to surrounding features of the e-machine system 100. Furthermore, in some embodiments the fluid circuit 180 and the rotor member 116 include features that provide lubrication to the shaft engagement member 128, the geartrain 132, bearing(s), and/or other components of the e-machine system 100.

Additionally, in some embodiments the e-machine system 100 includes a control system 133. The control system 133 may be a computerized control system with at least one processor, sensor, and computerized memory device. The processor generates and outputs control signals for one or more components of the e-machine system 100 based on sensor input received from the sensor(s) and/or based on stored programming, logic, look-up tables, etc. on the memory device. Accordingly, the control system 133 controls the e-machine 110, the fluid circuit 180, and/or other components of the e-machine system 100.

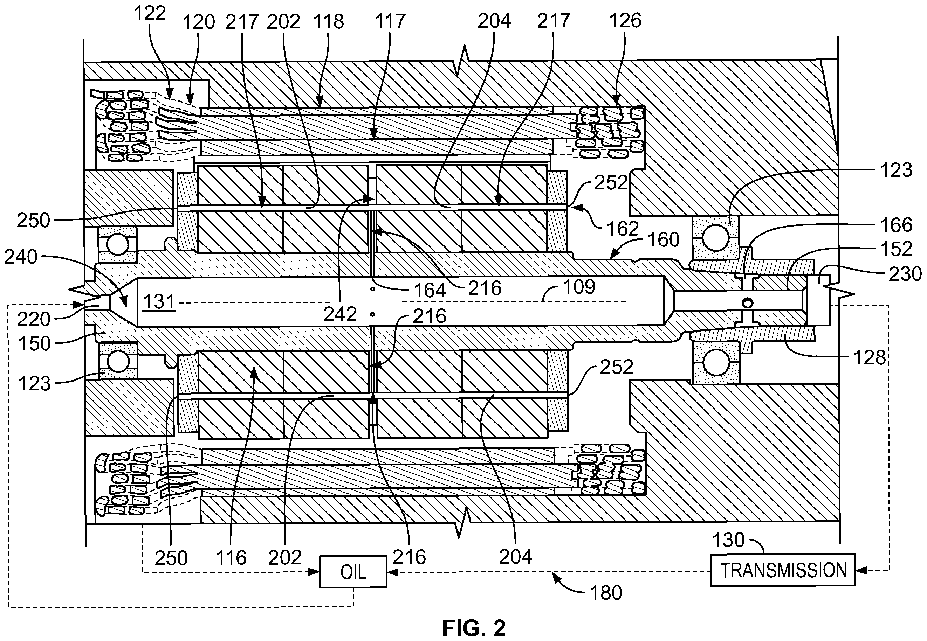

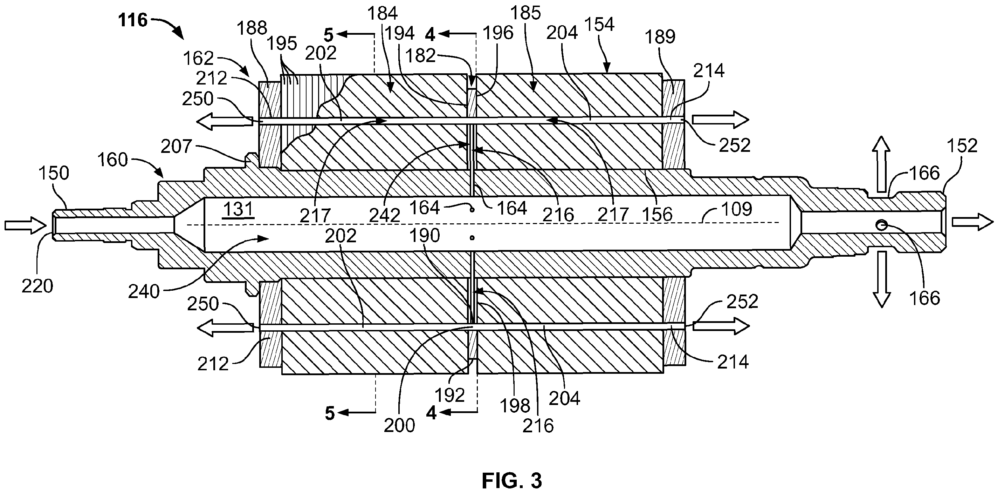

Referring now to FIGS. 2 and 3, the electric motor 112 will be discussed in greater detail according to example embodiments. As shown in FIG. 2, the stator member 117 may include a stator core 118 and a plurality of stator windings 120 supported thereon. The stator windings 120 extend longitudinally through the core 118 and may extend outward from the core 118 at respective first end windings 122 and second end windings 126, which are disposed on opposite longitudinal ends of the core 118 along the axis 119. The first and second end windings 122, 126 extend out of the core 118 and back, extending substantially in a helical direction relative to the axis 109. Moreover, as shown in FIG. 2, the electric motor 112 may include at least one bearing member 123, such as a rolling element bearing, that rotatably supports the rotor member 116 for rotation about the axis 109 within the stator member 117. In some embodiments, there are two bearing members 123, which are spaced apart on opposite longitudinal ends of the motor 112.

As shown in FIGS. 2 and 3, the rotor member 116 may be generally cylindrical with a first end 150 and a second end 152 that are spaced apart along the axis 109. The rotor member 116 may also include an outer radial area 154 that faces outward radially from the axis 109. The radius of the outer radial area 154 may vary along the axis 109.

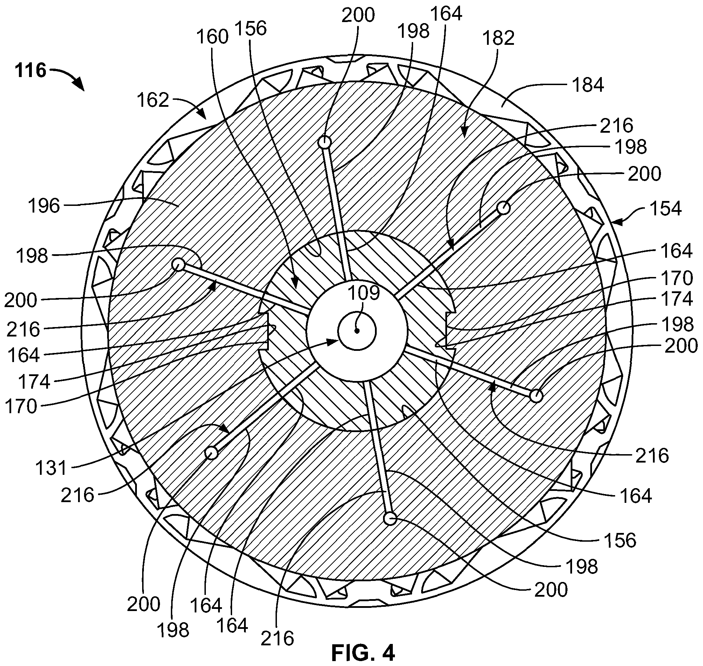

As shown in FIG. 3, the rotor member 116 comprises a shaft 160. The shaft 160 may be elongate, rigid, and strong, and may extend along the axis 109 between the first end 150 and the second end 152. The shaft 160 may be formed of steel, aluminum alloy, or another suitable material. As shown in FIG. 4, the shaft 160 may include a keying feature, such as one or more notches 170, for fixing other components to the shaft 160 as will be discussed. In some embodiments, there may be two notches 170 on opposite sides of the shaft 160 as shown in FIG. 4 and spaced apart equally about the axis 109.

As shown in FIGS. 3 and 4, the shaft 160 is at least partially hollow along the longitudinal length thereof. In some embodiments, the shaft 160 is hollow so as to define an inner channel 131 that extends from the first end 150 to the second end 152. Accordingly, the first end 150 may be open, the second end 152 may be open as well, and the inner channel 131 may extend continuously (i.e., uninterrupted) through the shaft 160, along the axis 109.

In some embodiments, the shaft 160 further includes at least one first radial aperture 164. As shown in FIG. 4, there may be a plurality of (e.g., six) first radial apertures 164 disposed substantially at a longitudinal midpoint between the first end 150 and the second end 152. The plurality of first radial apertures 164 are spaced apart substantially equally in the circumferential direction about the axis 109. The first radial apertures 164 may be through-holes that are directed normal to the axis 109.

The shaft 160 may also include at least one second radial aperture 166 (FIG. 3). There may be a plurality of (e.g., four) second radial apertures 166 disposed at or proximate the second end 152. The plurality of second radial apertures 166 are spaced apart substantially equally in the circumferential direction about the axis 109. The second radial apertures 166 may be through-holes that are directed normal to the axis 109.

As shown in FIGS. 2-5, the rotor member 116 comprises a core arrangement 162. The core arrangement 162 may be generally cylindrical in shape and hollow so as to define the outer radial area 154 that faces outward radially from the axis 109 and an inner radial face 156 that faces generally inward radially toward the axis 109. The core arrangement 162 is supported on the shaft 160 with the inner radial face 156 mated against and keyed against rotation with the shaft 160. The inner radial face 156 may include keying features, such as two opposing keying rails 174 that are received in respective ones of the notches 170 of the shaft 160 to fix the core arrangement 162 and the shaft 160 together for rotation about the axis 109. The core arrangement 162 is, in some embodiments, substantially centered about the axis 109. The shaft 160 extends through the core arrangement 162 (i.e., the core arrangement 162 receives the shaft 160 therein), and the shaft 160 may project from both ends of the core arrangement 162.

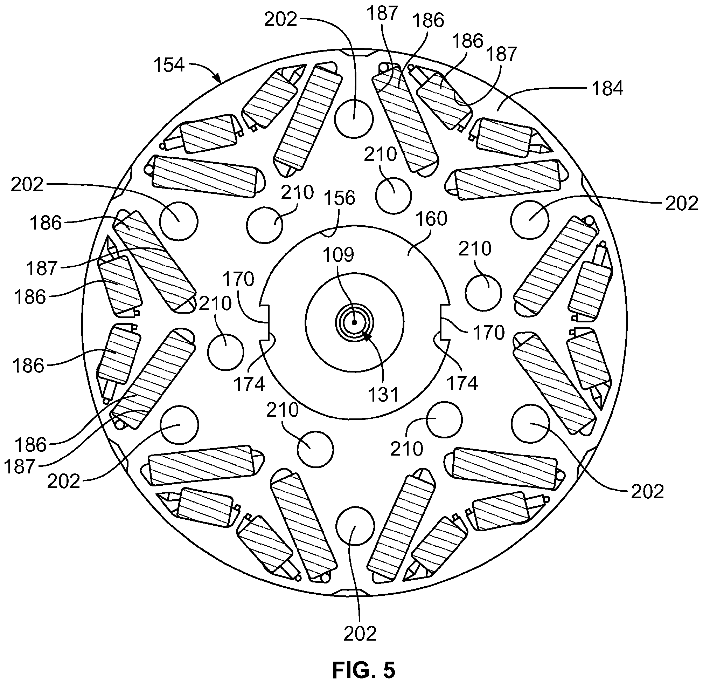

In some embodiments, the core arrangement 162 comprises a radial distribution member 182, which is sandwiched or stacked axially between a first core member 184 and a second core member 185. The core arrangement 162 may further include a plurality of permanent magnets 186 (FIG. 5), which are supported within respective ones of the first core member 184 and the second core member 185. Additionally, the core arrangement 162 may include a first end plate 188 (i.e., first balance plate) disposed proximate the first end 150, and the core arrangement 162 may include a second end plate 189 (i.e., second balance plate) disposed proximate the second end 152. The magnets 186 are, in some embodiments, provided in the core members 184, 185, and the radial distribution member 182, the core members 184, 185, and the end plates 188, 189 are stacked together along the axis 109 on the shaft 160. As such, the core members 184, 185, the radial distribution member 182, and the end plates 188, 189 collectively define the outer radial face 154 and the inner radial face 156.

In the embodiment of FIGS. 3 and 4, the radial distribution member 182 is a flat, annular plate with a first axial face 194 and a second axial face 196. The first axial face 194 may be substantially smooth, may be disposed normal to the axis 109, and may face toward the first end 150. The second axial face 196 may be similar, except the second axial face 196 may include one or more radial grooves 198 that radiate from the axis 109. The radial grooves 198 may be straight and may extend normal to the axis 109. The radial grooves 198 may intersect and may extend (radiate) from the inner radial face 156. In some embodiments, there are six (6) radial grooves 198, which are spaced equally about the axis 109. The radial grooves 198 may correspond in shape, dimension, position, etc. with that of the first radial apertures 164 of the shaft 160. Accordingly, there are radially-aligned pairings of one of the radial grooves 198 and respective ones of the radial apertures 164.

The radial distribution member 182 may further include one or more through-holes 200 that extend along the axis 109 between the first and second axial faces 194, 196. In the embodiment represented in FIG. 4, there are six through-holes 200, but it will be appreciated that there may be more or less through-holes without departing from the scope of the present disclosure. The through-holes 200 may be disposed at and intersect respective ones of the radial grooves 198 at the outer radial end thereof.

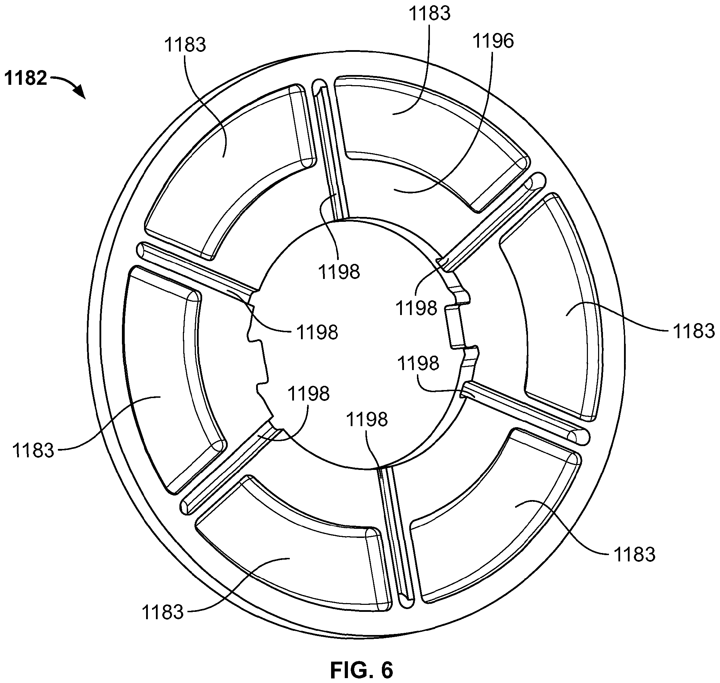

Additional embodiments of the radial distribution member are illustrated in FIG. 6 and indicated with reference number 1182. The radial distribution member 1182 may be substantially similar to the radial distribution member 182 of FIG. 4 except as noted. Features of the radial distribution member 1182 that correspond to those of the radial distribution member 182 are indicated with corresponding reference numbers increased by 1000.

As shown in FIG. 6, the second axial face 1196 of the radial distribution member 1182 may include one or more weight-reducing openings, such as recesses 1183. In some embodiments, there may be six recesses 1183, which arcuately extend between neighboring ones of the grooves 1198. The recesses 1183 may be included to advantageously reduce weight from the radial distribution member 1182.

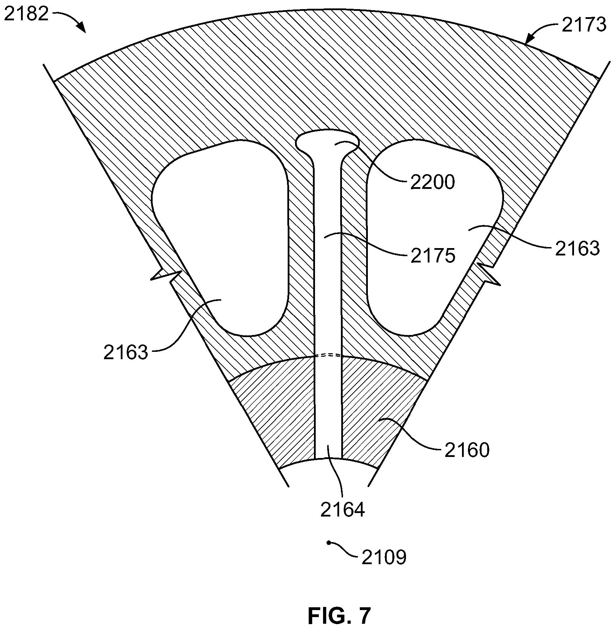

Further embodiments of the radial distribution member are illustrated in FIG. 7 and indicated with reference number 2182. The radial distribution member 2182 is substantially similar to the radial distribution member 182 of FIG. 4 except as noted. Features of the radial distribution member 2182 that correspond to those of the radial distribution member 182 are indicated with corresponding reference numbers increased by 2000.

A wedge 2173 of the radial distribution member 2182 is shown in FIG. 7, and it will be appreciated that, in various embodiments, the radial distribution member 2182 includes a plurality of wedges 2173 that together define an annular radial distribution member 2182. The wedge 2173 includes a slot 2175 that extends through the entire thickness thereof. The slot 2175 may extend radially relative to the axis 2109 with one end fluidly connected to the first radial aperture 2164 of the shaft 2160 and the other end defining a bulbous through-hole 2200. Furthermore, the radial distribution member 2182 may include weight-reducing openings 2163 on both sides of the slot 2175. The openings 2163 may be holes extending through the entire thickness of the wedge 2173. The openings 2163 advantageously reduce weight of the radial distribution member 2182. Also, the enlarged, bulbous through-hole 2200 promotes efficient flow of fluid therethrough.

In some embodiments, the radial distribution member 2182 comprises a lamination, disk, etc. that is made from a metallic, magnetic material. The plate 2182 may be disposed centrally along the axis of rotation of the rotor. Accordingly, in addition to distributing fluid within the rotor, the plate 2182 advantageously provides improved magnetic flux during operation of the e-machine.

Further features of the core arrangement 162 will be further discussed, assuming that the radial distribution member 182 of FIG. 4 is included therein. However, a skilled person in this technical field would appreciate that the embodiments of the radial distribution member 1182 of FIG. 6, the radial distribution member 2182 of FIG. 7, or another embodiment may be included without departing from the scope of the present disclosure.

The first and second core members 184, 185 may be substantially similar to each other. As shown in the embodiment of FIG. 3, the first and second core members 184, 185 comprise a plurality of laminations 195 (i.e., thin, flat plates that are stacked together along the axis 109). The first core member 184 is stacked against the first axial face 194 of the radial distribution member 182, and the second core member 185 is stacked against the second axial face 196 of the radial distribution member 182. As shown in FIG. 5, the first core member 184 includes a plurality of pockets 187 that receive respective ones of the plurality of permanent magnets 186. As such, the magnets 186 are arranged and distributed evenly about the axis 109. The second core member 185 is substantially similar and supports respective ones of the plurality of magnets 186. The magnets 186 operatively couple with the stator windings 120 during operation of the motor 112, such that the rotor member 116 is driven in rotation about the axis 109. It will be appreciated that the magnets 186 and areas of the core arrangement 162 adjacent thereto generate heat during operation of the motor 112; therefore, as will be discussed, the fluid circuit 180 may be configured to provide cooling to (i.e., remove heat from) these areas of the core arrangement 162.

Furthermore, as shown in FIG. 5, the first core member 184 may define one or more axial channels 202. In some embodiments, there are six (6) axial channels 202 that are spaced substantially equally about the axis 109; however, it will be appreciated that there may be more or less without departing from the scope of the present disclosure. The axial channels 202 may be rounded (e.g., circular) holes that extend along the axis 109 (e.g., parallel to the axis 109), through the laminations 195 of the first core member 184. The axial channels 202 may be disposed in close proximity to the pockets 187 holding the magnets 186 such that the axial channels 202 and magnets 186 may be "thermally coupled" as will be discussed in greater detail below. The axial channels 202 may be substantially aligned with and fluidly connected to respective ones of the through-holes 200 of the radial distribution member 182. As indicated in FIG. 3, the second core member 185 may include axial channels 204, which may correspond to the axial channels 202 of the first core member 184. Thus, the axial channels 204 may align with and fluidly connect to respective ones of the through-holes 200 as well.

Moreover, in the embodiment of FIG. 5, the first core member 184 includes one or more handling apertures 210. As shown, there may be a total of six (6) handling apertures 210 spaced substantially evenly about the axis 109. The handling apertures 210 may be rounded (e.g., circular) through-holes extending along (e.g., parallel to) the axis 109. The second core member 185 may include similar, corresponding handling apertures 210. The handling apertures 210 may be used to angularly align the laminations 195 about the axis 109. It will be appreciated by a skilled person in this technical field that the handling apertures 210 are optional features.

In the embodiment of FIG. 3, the first end plate 188 is a flat, annular plate that abuts the first core member 184 on an end opposite the radial distribution member 182. The first end plate 188 may be compressed between the first core member 184 and an outer radial stop projection 207 of the shaft 160. The first end plate 188 may also include one or more outlet holes 212. There may be six (6) outlet holes 212, which may be spaced substantially equally about the axis 109. The outlet holes 212 may be through-holes extending axially through the first end plate 188. The outlet holes 212 may align with and fluidly connect with respective ones of the axial channels 202 of the first core member 184.

Furthermore, the second end plate 189 may be substantially similar to the first end plate 188. The second end plate 189 may abut the second core member 185 on an end opposite the radial distribution member 182. The second end plate 189 may include one or more outlet holes 214. There may be six (6) outlet holes 214, which may be spaced substantially equally about the axis 109. The outlet holes 214 may be through-holes extending axially through the second end plate 189. The outlet holes 214 may align with and fluidly connect with respective ones of the axial channels 204 of the second core member 185.

When assembled on the shaft 160, the core arrangement 162 may define a plurality of internal core fluid passages. For example, the second axial face 196 of the radial distribution member 182 and the abutting second core member 185 may cooperatively define a plurality of radial segments 216 of such core fluid passages. The radial segments 216 may be fluidly connected on an upstream end to respective ones of the first radial apertures 164 of the shaft 160. The downstream end of the radial segments 216 may be fluidly connected to respective ones of the through-holes 200 of the radial distribution member 182. The axial channels 202, 204 and the respective outlet holes 212, 214 of the core arrangement 162 may be fluidly connected to the through-holes 200 for further defining axial segments 217 of the internal core fluid passages.

The rotor member 116 is also fluidly coupled within the fluid circuit 180 as represented in FIGS. 2 and 3. Generally, the inner channel 131 of the shaft 160 may define a shaft fluid passage with a fluid inlet 220 for the rotor member 116. The fluid inlet 220 may be fluidly connected to the fluid circuit 180 and configured to receive fluid via the fluid circuit 180. Also, the core fluid passages may be fluidly connected to the shaft fluid passage (e.g., fluidly connected to the fluid inner channel 131) for directing and distributing the fluid further downstream through the core arrangement 162. The shaft fluid passage and the core fluid passages of the rotor member 116 may also define respective fluid outlets from the rotor member 116 as will be discussed, and the fluid from the rotor member 116 may be delivered to the stator member 117, to the transmission 130, and/or to other components before being re-circulated back to the rotor member 116.

More specifically, a first fluid path 240 may be defined in a downstream direction in the following sequence: from the fluid inlet 220, along the axis 109, through the inner channel 131 of the shaft 160, to the second radial apertures 166 at the second end 152. Accordingly, fluid flowing along this first fluid path 240 may be delivered to the shaft engagement member 128 and/or the transmission 130 for lubricating the same. Additionally, the first fluid path 240 may include the axial opening in the shaft 160 at the second end 152 such that fluid flowing through the inner channel 131 branches between the plurality of second radial apertures 166 as well as the axial opening in the shaft 160 at the second end 152. In some embodiments, a plug member 230 (FIG. 2) may be received within the shaft 160 at the second end 152, and the plug member 230 may include one or more openings extending axially therethrough to regulate flow out of the inner channel 131 at the second end 152. Fluid flowing through the plug member 230 may be delivered to the shaft engagement member 128 and/or the transmission 130 for lubricating the same. Further downstream, the fluid may flow away from the rotor member 116 and may drain, flow, etc. to a gearbox sump, a pump, a filter, etc. of the fluid circuit 180 for re-circulation back to the rotor fluid inlet 220 of the rotor member 116 as shown in FIG. 2.

Furthermore, a second fluid path may be defined in a downstream direction in the following sequence: from the fluid inlet 220, along the axis 109, through the inner channel 131 of the shaft 160, branch apart and extend radially through the first radial apertures 164 and into respective ones of the radial segments 216 of the core arrangement 162. In the same sequence, from the radial segments 216, the fluid paths may further branch apart to extend axially toward the first end 150 through the axial channels 202 and toward the second end 152 through the axial channels 204. The axial channels 202 may terminate at the outlet holes 212, which may define first rotor core outlets 250 for the second fluid path, and the axial channels 204 may terminate at the outlet holes 214, which may define second rotor core outlets 252 for the second fluid path. Thus, fluid flowing along these second fluid paths flows through the core arrangement 162 to cool the magnets 186 and adjacent areas thereof, and this fluid may spray or otherwise flow from the outlets 250, 252 toward the end windings 122, 126 for cooling the same. The fluid may also flow to one or more of the bearings 123 for lubricating the same. Further downstream, the fluid may flow away from the rotor member 116 and may drain, flow, etc. to a gearbox sump, a pump, a filter, etc. of the fluid circuit 180 for re-circulation back to the rotor fluid inlet 220 of the rotor member 116 as shown in FIG. 2.

Accordingly, the e-machine system 100 of the present disclosure provides effective cooling and lubrication. Coolant/lubricant is directed through rotor member 116 for cooling the same. Thus, the rotor member 116 may operate at reduced temperatures and may provide increased operating efficiency and improved performance due to the cooling provided. These features may be provided on a wide range of rotor configurations (e.g., symmetric, asymmetric, sleeved, sleeveless, etc.). Furthermore, the core arrangement 162 may output coolant toward the stator member 117 for effectively cooling the same, and/or may be directed toward the shaft engagement member 128, the transmission 130, the bearings 123, etc. for lubricating the same. These features may be provided in a compact, low-weight package. Additionally, the e-machine systems 100 of the present disclosure have a relatively low part count and may be manufactured efficiently for reduced manufacturing costs and time.

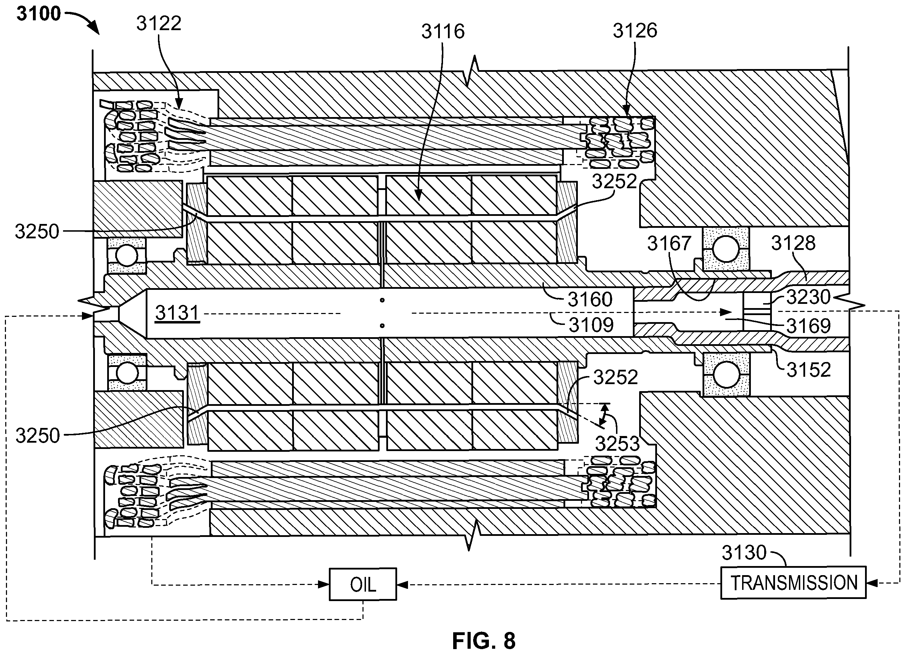

Referring now to FIG. 8, additional embodiments of the e-machine system 3100 are illustrated. The e-machine system 3100 may be substantially similar to the e-machine system 100 of FIG. 2 except as noted. Features of the e-machine system 3100 that correspond to those of the e-machine system 100 of FIG. 2 are indicated with corresponding reference numbers increased by 3000.

The first rotor core outlets 3250 and the second rotor core outlets 3252 (i.e., the hole axis, spray axis, etc.) may be directed at a positive angle 3253 (i.e., non-zero angle, divergent, intersecting) relative to the axis 3109 of the rotor member 3116. As shown in FIG. 8, the outlets 3250, 3252 may be angled outward slightly to output fluid outward from the axis 3109; however, it will be appreciated that the outlets 3250, 3252 may be angled inward slightly toward the axis 3109. As such, the direction of the spray, output, etc. from the outlets 3250, 3252 may be controlled. For example, the outlets 3250, 3252 may be directed toward the end windings 3122, 3126.

Additionally, the second end 3152 of the shaft 3160 may be closed off but for an axial opening 3167 that outlets fluid from the inner channel 3131. The shaft engagement member 3128 may be a gearbox shaft that is received within the axial opening 3167 and engaged (e.g., by a spline, etc.) to the shaft 3160. The shaft engagement member 3128 may be hollow so as to define an internal passage 3169 that is fluidly connected to the inner channel 3131 to receive flow therefrom. Also, the plug member 3230 may be received within the internal passage 3169. The plug member 3230 may be adjustable so as to selectively regulate flow from the inner channel 3131 and into the transmission 3130. In some embodiments, the plug 3230 is threadably attached within the shaft engagement member 3128, and the plug 3230 may be threadably advanced to selectively adjust fluid flow from the inner channel 3131 and into the transmission 3130.

The e-machine system 3100 provides the advantages of those embodiments discussed above. Also, the angled outlets 3250, 3252 provides coolant more directly to the end windings 3122, 3126 and/or other components for efficient cooling. The e-machine system 3100 may also provide effective flow of coolant to the transmission 3130. The e-machine system 3100 may also provide manufacturing advantages.

The present disclosure further includes the following examples:

In some embodiments, an e-machine is disclosed that includes a stator member that defines an axis and a rotor member with a shaft that is supported for rotation about the axis. The shaft includes a shaft fluid passage defined therein and extending along the axis. The shaft fluid passage defines a fluid inlet. The rotor member includes a core arrangement that is supported on the shaft. The core arrangement is operably coupled to the stator member to be driven thereby about the axis with the shaft. The core arrangement includes a core fluid passage that is fluidly coupled to the shaft fluid passage. The core fluid passage defines a fluid outlet. The rotor member defines a fluid path in a downstream direction from the fluid inlet and through the shaft fluid passage to the core fluid passage, and further in the downstream direction from the core fluid passage to the fluid outlet.

In some embodiments, the rotor member includes a first end and a second end that are separated along the axis, wherein the shaft includes a radial aperture that fluidly connects the shaft fluid passage to the core fluid passage, and wherein the fluid outlet is included proximate one of the first end and the second end.

Furthermore, in some embodiments, the core fluid passage includes a radial segment that extends radially from the radial aperture with respect to the axis and an axial segment that extends axially from the radial segment to the one of the first end and the second end.

Additionally, in some embodiments, the core arrangement includes a first member and a second member that are stacked together along the axis on the shaft, the first member at least partly defining the radial segment, and the second member at least partly defining the axial segment.

Moreover in some embodiments, the first member includes a weight-reducing opening adjacent the radial segment.

Also, in some embodiments, the radial segment includes a bulbous end.

Furthermore, in some embodiments, the radial segment is one of a plurality of radial segments defined by the first member, wherein the axial segment is one of a plurality of axial segments defined by the second member, the plurality of radial segments spaced apart circumferentially about the axis, the plurality of axial segments spaced apart circumferentially about the axis, and the plurality of axial segments fluidly coupled to respective ones of the plurality of radial segments.

Moreover, in some embodiments, the radial aperture is one of a plurality of radial apertures of the shaft, wherein the radial segment is one of a plurality of radial segments of the core arrangement, the plurality of radial segments being fluidly coupled with respective ones of the plurality of radial apertures.

In some embodiments, the fluid outlet is a first fluid outlet proximate the first end, and wherein the core arrangement includes a second fluid outlet proximate the second end. The first fluid outlet and the second fluid outlet are in fluid communication with the radial segment.

Also, in some embodiments, the core arrangement includes a permanent magnet, and the core fluid passage is disposed proximate the permanent magnet. The fluid path is configured to receive a fluid flowing in the downstream direction to receive heat from and cool the permanent magnet.

Furthermore, in some embodiments, the shaft includes a shaft outlet, and the fluid path is configured to receive a fluid flowing in the downstream direction for cooling the e-machine. The shaft outlet is configured to outlet the fluid for providing lubrication.

Additionally, in some embodiments, the core arrangement includes a radial distribution member, a plurality of laminations stacked on opposite sides of the radial distribution member, and a pair of end plates disposed on opposite ends of the core arrangement. The radial distribution member defines a radial segment of the core fluid passage. The plurality of laminations and the pair of end plates define respective axial segments of the core fluid passage.

In some embodiments, the stator member includes a plurality of end windings, and the fluid outlet is directed toward the plurality of end windings.

Moreover, in some embodiments, an e-machine system is disclosure with the e-machine, and the system further includes a transmission that is engaged with the shaft and that is fluidly connected to the shaft fluid passage.

Also, in some embodiments, a method of manufacturing the e-machine is disclosed.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the present disclosure as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements. Furthermore, the coupling between certain components may be an operational coupling allowing for, for example, a stator member to magnetically drive rotation of a rotor member.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with the necessary information for implementing an exemplary embodiment of the disclosure. It is understood that various changes may be made in the function and arrangement of elements described in an exemplary embodiment without departing from the scope of the disclosure as set forth in the appended claims.

## Claims

1. An e-machine comprising:
a stator member (117) that defines an axis (109); and
a rotor member (116) with a shaft (160, 3160) that is supported for rotation about the axis, the shaft including a shaft fluid passage (131, 3131) defined therein and extending along the axis, the shaft fluid passage defining a fluid inlet (220), the rotor member including a core arrangement (162) that is supported on the shaft, the core arrangement operably coupled to the stator member to be driven thereby about the axis with the shaft, the core arrangement including a core fluid passage (202, 204) that is fluidly coupled to the shaft fluid passage, the core fluid passage defining a fluid outlet (250, 252, 3250, 3252), the rotor member defining a fluid path in a downstream direction from the fluid inlet and through the shaft fluid passage to the core fluid passage, and further in the downstream direction from the core fluid passage to the fluid outlet.

2. The e-machine of claim 1, wherein the rotor member includes a first end (150) and a second end (152) that are separated along the axis, wherein the shaft includes a radial aperture (164) that fluidly connects the shaft fluid passage to the core fluid passage, and wherein the fluid outlet is included proximate one of the first end and the second end.

3. The e-machine of claim 2, wherein the core fluid passage includes a radial segment (216) that extends radially from the radial aperture with respect to the axis and an axial segment (217) that extends axially from the radial segment to the one of the first end and the second end.

4. The e-machine of claim 3, wherein the core arrangement includes a radial distribution member (182, 1182, 2182) and a core member (185) that are stacked together along the axis on the shaft, the radial distribution member (182) at least partly defining the radial segment, and the core member (185) at least partly defining the axial segment.

5. The e-machine of claim 4, wherein the radial distribution member (182) includes a weight-reducing opening (1183, 2163) adjacent the radial segment.

6. The e-machine of any one of claims 4 and 5, wherein the radial segment includes a bulbous end.

7. The e-machine of any one of claims 4, 5, and 6, wherein the radial segment is one of a plurality of radial segments (216) defined by the radial distribution member, wherein the axial segment is one of a plurality of axial segments (217) defined by the core member, the plurality of radial segments spaced apart circumferentially about the axis, the plurality of axial segments spaced apart circumferentially about the axis, and the plurality of axial segments fluidly coupled to respective ones of the plurality of radial segments.

8. The e-machine of any one of claims 3 to 7, wherein the radial aperture is one of a plurality of radial apertures (164) of the shaft, wherein the radial segment is one of a plurality of radial segments of the core arrangement, the plurality of radial segments being fluidly coupled with respective ones of the plurality of radial apertures.

9. The e-machine of any one of claims 3 to 8, wherein the fluid outlet is a first fluid outlet (250, 3250) proximate the first end, and wherein the core arrangement includes a second fluid outlet (252, 3252) proximate the second end, the first fluid outlet and the second fluid outlet in fluid communication with the radial segment.

10. The e-machine of any one of the preceding claims, wherein the core arrangement includes a permanent magnet (186), the core fluid passage disposed in a location proximate to the permanent magnet such that the fluid path is configured to receive a fluid flowing in the downstream direction so as to receive heat from and cool the permanent magnet.

11. The e-machine of any one of the preceding claims, wherein the shaft includes a shaft outlet, the fluid path configured to receive a fluid flowing in the downstream direction for cooling the e-machine, the shaft outlet configured to outlet the fluid from the shaft fluid passage.

12. The e-machine of any one of claims 2 and 5-11, wherein the core arrangement includes a radial distribution member (182), a plurality of laminations stacked on opposite sides of the radial distribution member, and a pair of end plates disposed on opposite ends of the core arrangement, the radial distribution member defining a radial segment of the core fluid passage, the plurality of laminations and the pair of end plates defining respective axial segments of the core fluid passage.

13. The e-machine of any one of the preceding claims, wherein the stator includes a plurality of end windings (122, 126, 3122, 3126), and wherein the fluid outlet is directed toward the plurality of end windings.

14. An e-machine system comprising an e-machine of any one of the preceding claims and a transmission (130) that is engaged with the shaft and that is fluidly connected to the shaft fluid passage.

15. A method of manufacturing the e-machine of any of the preceding claims, comprising:
supporting the rotor member within the stator member for rotation about the axis; and
housing the rotor member and the stator member within a housing member.
